# EUROPÄISCHE PATENTANMELDUNG

(11) **EP 1 852 485 A2**
(43) Veröffentlichungstag der Anmeldung: **07.11.2007**
(21) Anmeldenummer: 07008154.2
(22) Anmeldetag: 21.04.2007
(51) Int. Cl.: C09K 3/10

(54) **Rohranordnung**

(30) Priorität: 06.05.2006 DE 202006007246 U
(71) Anmelder: REHAU AG + Co, 95111 Rehau (DE)
(72) Erfinder: Liebel, Volker, 91058 Erlangen (DE); Kania, Guido, 91080 Marloffstein (DE)

(57) **Zusammenfassung**

Die Erfindung betrifft eine Rohranordnung zum Transport flüssiger und/oder gasförmiger Medien, wobei die Rohranordnungen über Steckverbindungen miteinander verbunden sind, in denen Dichtelemente angeordnet sind.

Die Erfindung hat sich die Aufgabe gestellt, die Nachteile des Standes der Technik zu überwinden und eine Rohranordnung aufzuzeigen, die kostengünstig und wirtschaftlich herstellbar ist, bei der sich keine Ablagerungen von aggressiven Stoffen bzw. Mikroorganismen im Ringraum zwischen den freien Enden der Rohranordnungen und am Dichtelement selbst sowie keine chemisch bzw. biologisch bedingten Verkrustungen bzw. Bewuchse anlagern und ausbilden können und bei der die Materialeigenschaften insgesamt erhalten bleiben.

Erfindungsgemäß wird dies dadurch gelöst, dass der Werkstoff des Dichtelementes wenigstens ein oligodynamisch wirkendes Material in einer Menge von 0,05 bis zu 20 %, bezogen auf die Gesamtmasse, eingelagert enthält.

## Beschreibung

Die Erfindung betrifft eine Rohranordnung zum Transport flüssiger und/oder gasförmiger Medien, wobei die Rohranordnungen über Steckverbindungen miteinander verbunden sind, in denen Dichtelemente angeordnet sind.

Derartige Rohranordnungen sind in einer Vielzahl und in verschiedenen Ausführungsbeispielen aus dem Stand der Technik bekannt.
Diese Rohranordnungen haben sich in der Praxis gut bewährt. Gleichwohl besteht ständig ein Bedarf, bestimmte Eigenschaften einer derartigen Rohranordnung bspw. bezüglich der Verarbeitung sowie der Ablagerung aggressiver Stoffe weiter zu verbessern.

Die Erfindung hat sich die Aufgabe gestellt, die Nachteile des Standes der Technik zu überwinden und eine Rohranordnung aufzuzeigen, die kostengünstig und wirtschaftlich herstellbar ist, bei der sich keine Ablagerungen von aggressiven Stoffen beziehungsweise Mikroorganismen im Ringraum zwischen den freien Enden der Rohranordnungen und am Dichtelement selbst, sowie keine chemisch beziehungsweise biologisch bedingten Verkrustungen beziehungsweise Bewuchse anlagern und ausbilden können und bei der die Materialeigenschaften insgesamt erhalten bleiben.

Erfindungsgemäß wird diese Aufgabe durch die kennzeichnenden Merkmale des Anspruches 1 gelöst.
Weitere die Erfindung detailliert beschreibende und ergänzende Merkmale sind in den Unteransprüchen ausgeführt.

Die erfindungsgemäße Rohranordnung zeichnet sich dadurch aus, dass der Werkstoff des Dichtelementes wenigstens ein oligodynamisch wirkendes Material in einer Menge von 0,05 bis zu 20 % bezogen auf die Gesamtmasse, eingelagert enthält.

Die erfindungsgemäße Rohranordnung zeichnet sich weiterhin dadurch aus, dass der Werkstoff des Dichtelementes über den gesamten Querschnitt in räumlich gleichbleibender Verteilung wenigstens ein oligodynamisch wirkendes Material in einer Menge von 0,05 bis zu 20 % bezogen auf die Gesamtmasse, einlagert enthält.
Somit kann vorteilhafter Weise erreicht werden, dass im Ringraum zwischen den freien Enden der Rohranordnungen und am Dichtelement selbst keine chemisch beziehungsweise biologisch bedingten Verkrustungen beziehungsweise Bewuchse sich anlagern und ausbilden können.

Das oligodynamisch wirkende Material der erfindungsgemäßen Rohranordnung ist in einer weiteren Ausführungsform eine bakterizid und / oder mikrobizid wirkende Metallkomponente.
Es liegt jedoch auch im Rahmen der Erfindung, dass das oligodynamisch wirkende Material der erfindungsgemäßen Rohranordnung und/oder des Dekorelementes eine Metallorganische Verbindung ist, wie bspw. Zinkpyrithion.

Die erfindungsgemäße Rohranordnung weist eine signifikante bakterizide Wirkung gegenüber Pseudomonas aeruginosa, Staphylococcus aureus, Alcaligenes faecalis, Escherichia coli und Enterococcus faecalis auf. Es konnte weiterhin vorteilhaft festgestellt werden, dass die erfindungsgemäße Rohranordnung eine signifikante fungizide Wirkung gegenüber Candida albicans aufweist.

Bei der erfindungsgemäßen Rohranordnung ist die Metallkomponente eine Metallionen abgebende Substanz, die durch den Kontakt mit bspw. einer Flüssigkeit, insbesondere beim dem Abwaschen der Rohranordnung, die Metallionen freisetzt.
Es konnte überraschend gefunden werden, dass die Metallionen abgebende Substanz ein Salz, Oxid, Carbid, eine metallorganische Verbindung ist, die aus der Gruppe Silber, Gold, Kupfer, Zink, Blei, Arsen, Cadmium ausgewählt ist.

Entgegen der Lehre des Standes der Technik, derartige Rohranordnungen mit zusätzlichen aufwendigen Schutzschichten zu versehen, konnte überraschend gefunden werden, dass die metallabgebende Substanz aus der Gruppe der Zeolithe ausgewählt ist, wobei diese sowohl natürlich vorkommende als auch industriell hergestellte Zeolithe sind.

Die Rohranordnung zeichnet sich außerdem erfindungsgemäß dadurch aus, dass ein Teil der im Zeolith enthaltenen Metalle durch wenigsten eine Art von Ionen austauschbaren Metallen ersetzt ist, die aus der Gruppe Silber, Gold, Kupfer, Zink, Blei, Arsen, Cadmium ausgewählt sind. Hier haben sich beispielsweise Wirkstoffe auf der Basis von Sodium Alumosilicaten ausgezeichnet.

Ein weiterer Vorteil der erfindungsgemäßen Rohranordnung wird dadurch gesehen, dass eine langfristige Sicherstellung des Nichtbildens bzw. Anwachsens von Belägen in bspw. Trinkwasserrohren sichergestellt ist, da die Metallionen abgebende Substanz in einer mittleren Korngröße von etwa 6 µm in dem Werkstoff des Dichtelementes so eingearbeitet werden kann, dass sowohl eine Verteilung über den gesamten Querschnitt in räumlich gleichmäßiger Verteilung, als auch eine Verteilung vorzugsweise in dem vom Dichtelement abgewandten Bereiches der Steckverbindung der Rohranordnung realisierbar ist.
Das Dichtelement kann dabei mit einer Beschichtung versehen sein, die wenigstens ein oligodynamisch wirkendes Material in einer Menge von 0,05 bis zu 20 % bezogen auf die Gesamtmasse, eingelagert enthält bzw. ebenfalls eine bakterizid und / oder mikrobizid wirkende Metallkomponente aufweist. Diese Beschichtungen sind an sich bekannterweise UVhärtende Lacke, wie Polyacrylate; lösungsmittelhaltige Lacke, wie PUR- bzw. Acrylat- basierende Lacke bzw. wässrige Lacke, wie PUR- basierende Lacke.

Es hat sich als vorteilhaft herausgestellt, dass bei der erfindungsgemäßen Rohranordnung der Werkstoff des Dichtelementes ein Silikonkautschuk, ein natürlicher und/oder synthetischer Kautschuk, ein Styren- Butadien- Kautschuk, ein Chloropren- Kautschuk und dergleichen sein kann. Durch den Einsatz der erfindungsgemäßen Rohranordnung können die Reinigungsaufwendungen beim Einsatz bspw. in Trinkwasserohren oder in medizinischen Bereichen wie Arztpraxen reduziert werden.

Bei der Verwendung eines Werkstoffes des Dichtelementes mit wenigsten ein oligodynamisch wirkendem Material in einer Menge von 0,05 bis 20 % bezogen auf die Gesamtmasse in einer Rohranordnung zum Transport flüssiger und/oder gasförmiger Medien, wobei die Rohranordnung über Steckverbindungen miteinander verbunden sind, in denen Dichtelemente angeordnet sind, kann eine signifikante Verbesserung der Eigenschaften bezüglich der Verarbeitung sowie der Ablagerung aggressiver Stoffe durch die Rohranordnung realisiert werden.

Weiterhin vorteilhaft wird gesehen, dass auch bereits bei Rohranordnungen, welche mit den Nachteilen des bekannten Standes zur Technik behaftet sind, eine kostengünstige "Sanierung" realisiert werden kann, die zu den gleichen Vorteilen wie eine ursprünglich montierte erfindungsgemäße Rohranordnung führt, indem ein erfindungsgemäßes Dichtelement in der Rohranordnung angeordnet wird.

Es liegt jedoch auch im Rahmen der Erfindung, dass der Werkstoff des Dichtelementes der Rohranordnung in einer Menge von 0,05 bis zu 20 % bezogen auf die Gesamtmasse Fungizide wie beispielsweise DCOIT (4,5-Dichlor-2-N-octyl-4-isothiazolin-3-on Dichloroctylisothiazolinon), OIT (2-N-octyl-4-isothiazolin-3-on), Bethoxazin (3-Benzo[b]thien-2-yl-5,6-dihydro-1,4,2-oxathiazin,4-oxid), Fluorfolpet (2-(Dichlorfluormethylthio)-isoindol-1,3-dion N-Fluordichlormethylthiophthalimid Fluorcaptan Fluorphaltan), OBPA (10,10'-Oxybispenoxyarsin) beziehungsweise BCM (Methyl-N-(2-benzimidazolyl) -carbamat Benzimidazolylcarbaminsäuremethylester Carbendazim) aufweist.

Im Folgenden soll an den die Erfindung nicht einschränkenden Beispielen, diese näher beschrieben werden.

### Beispiel 1:

Die erfindungsgemäße Rohranordnung weist auf
ein Rohr bestehend aus 100 % Polypropylen
ein Dichtelement bestehend aus

| | |
|---|---|
| 95 % | Gummi |
| 0,5 bis 1,5 % | Silbersalz X₂ₙO- Na₂O- Al₂O₃- 2SiO₂ X= Ag⁺ |
| 0,5 bis 5 % | DCOIT (4,5-Dichlor-2-N-octyl-4-isothiazolin-3-on Dichloroctylisothiazolinon) |

### Beispiel 2:

Die erfindungsgemäße Rohranordnung weist auf:
ein Rohr bestehend aus 100 % Polyvinylchlorid
ein Dichtelement bestehend aus

| | |
|---|---|
| 95 % | Styren- Butadien- Kautschuk |
| 0,1 bis 1,0% | Silbersalz X₂ₙO- Na₂O- Al₂O₃- 2SiO₂ X= Ag⁺ |
| 0,5 bis 5 % | OBPA (10,10'-Oxybispenoxyarsin) |

### Beispiel 3:

Die erfindungsgemäße Rohranordnung weist auf:
ein Rohr bestehend aus 100 % Polyethylen
ein Dichtelement bestehend aus

| | |
|---|---|
| 95 % | Chloropren- Kautschuk |
| 0,1 bis 5 % | Silbersalz X₂ₙO- Na₂O- Al₂O₃- 2SiO₂ X= Ag⁺ |
| 0,5 bis 5 % | OBPA (10,10-Oxybispenoxyarsin) |

## Patentansprüche

1. Rohranordnung zum Transport flüssiger und/oder gasförmiger Medien, wobei die Rohranordnungen über Steckverbindungen miteinander verbunden sind, in denen Dichtelemente angeordnet sind, **dadurch gekennzeichnet,dass** der Werkstoff des Dichtelementes wenigstens ein oligodynamisch wirkendes Material in einer Menge von 0,05 bis zu 20 %, bezogen auf die Gesamtmasse, eingelagert enthält.

2. Rohranordnung nach Anspruch 1, **dadurch gekennzeichnet, dass** der Werkstoff des Dichtelementes über seinen gesamten Querschnitt in räumlich gleichmäßiger Verteilung wenigstens ein oligodynamisch wirkendes Material in einer Menge von 0,05 bis zu 20 %, bezogen auf die Gesamtmasse, eingelagert enthält.

3. Rohranordnung nach Anspruch 1 bis 2, **dadurch gekennzeichnet, dass** das oligodynamisch wirkende Material eine bakterizid und / oder microbizid wirkende Metallkomponente ist.

4. Rohranordnung nach Anspruch 1 bis 3, **dadurch gekennzeichnet, dass** das oligodynamisch wirkende Material eine metallorganische Verbindung ist.

5. Rohranordnung nach Anspruch 1 bis 4, **dadurch gekennzeichnet, dass** das oligodynamisch wirkende Material eine signifikante Wirkung gegenüber Pseudomonas aeruginosa, Staphylococcus aureus, Alcaligenes faecalis, Escherichia coli, Candida albicans und Enterococcus faecalis aufweist.

6. Rohranordnung nach Anspruch 1 bis 5, **dadurch gekennzeichnet, dass** die Metallkomponente eine Metallionen abgebende Substanz ist.

7. Rohranordnung nach Anspruch 1 bis 6, **dadurch gekennzeichnet, dass** die Metallkomponente durch den Kontakt mit der Flüssigkeit, insbesondere Abwasser, die Metallionen freisetzt.

8. Rohranordnung nach Anspruch 1 bis 7, **dadurch gekennzeichnet, dass** die Metallionen abgebende Substanz ein Salz, Oxid, Carbid, eine metallorganische Verbindung ist, die aus der Gruppe Silber, Gold, Kupfer, Zink, Blei, Arsen, Cadmium ausgewählt ist.

9. Rohranordnung nach Anspruch 1 bis 8, **dadurch gekennzeichnet, dass** die Metallionen abgebende Substanz aus der Gruppe der Zeolithe ausgewählt ist.

10. Rohranordnung nach Anspruch 1 bis 9, **dadurch gekennzeichnet, dass** ein Teil der im Zeolith enthaltenen Metalle durch wenigstens eine Art von Ionen austauschbaren Metallen ersetzt ist, die aus der Gruppe Silber, Gold, Kupfer, Zink, Blei, Arsen, Cadmium ausgewählt sind.

11. Rohranordnung nach Anspruch 1 bis 10, **dadurch gekennzeichnet, dass** die Metallionen abgebende Substanz eine mittlere Korngröße von etwa 0,1 bis 10 µm aufweist.

12. Rohranordnung nach Anspruch 1 bis 11, **dadurch gekennzeichnet, dass** der Werkstoff des Dichtelementes wenigstens teilweise ein elastischer Werkstoff ist.

13. Rohranordnung nach Anspruch 1 bis 12, **dadurch gekennzeichnet, dass** der Werkstoff des Dichtelementes ein Silikonkautschuk ist.

14. Rohranordnung nach Anspruch 1 bis 12, **dadurch gekennzeichnet, dass** der Werkstoff des Dichtelementes ein natürlicher und/oder synthetischer Kautschuk ist.

15. Rohranordnung nach Anspruch 1 bis 12, **dadurch gekennzeichnet, dass** der Werkstoff des Dichtelementes ein Styren- Butadien- Kautschuk ist.

16. Rohranordnung nach Anspruch 1 bis 12, **dadurch gekennzeichnet, dass** der Werkstoff des Dichtelementes ein Chloropren- Kautschuk ist.

17. Verwendung einer Rohranordnung zum Transport flüssiger und/oder gasförmiger Medien, wobei die Rohranordnung über Steckverbindungen miteinander verbunden sind, in denen Dichtelemente angeordnet sind, **dadurch gekennzeichnet, dass** der Werkstoff des Dichtelementes über seinen gesamten Querschnitt in räumlich gleichmäßiger Verteilung wenigstens ein oligodynamisch wirkendes Material in einer Menge von 0,05 bis 20 %, bezogen auf die Gesamtmasse, eingelagert enthält.
